# EUROPÄISCHE PATENTSCHRIFT

(11) **EP 3 815 961 B1**
(45) Veröffentlichungstag und Bekanntmachung des Hinweises auf die Patenterteilung: **22.06.2022**
(21) Anmeldenummer: 20203397.3
(22) Anmeldetag: 22.10.2020
(51) Int. Cl.: B60N 2/16

(54) **VORRICHTUNG ZUR EINSTELLUNG EINER SITZPOSITION**
DEVICE FOR ADJUSTING A SITTING POSITION
DISPOSITIF DE RÉGLAGE D'UNE POSITION ASSISE

(30) Priorität: 29.10.2019 DE 102019129159
(43) Veröffentlichungstag der Anmeldung: 05.05.2021
(73) Patentinhaber: GRAMMER AG, 92289 Ursensollen (DE)
(72) Erfinder: Haller, Erwin, 92262 Birgland (DE)
(74) Vertreter: Hannke, Christian

(56) Entgegenhaltungen:
- WO-A1-2019/059286
- DE-A1- 2 306 478
- DE-A1-102015 201 649
- DE-U1- 29 824 882
- GB-A- 1 208 051

## Beschreibung

Die Erfindung betrifft eine Vorrichtung zur Einstellung einer Sitzposition für einen Fahrzeugsitz, wobei die Vorrichtung mit zumindest einem Trägerelement für ein Sitzteil und einem Sitzunterbau verbunden ist.

Derartige Vorrichtungen sind insbesondere für Fahrzeugsitze in Nutzfahrzeugen wie beispielsweise Traktoren, Baumaschinen, Stapler, Lastkraftwagen usw. vorgesehen. Fahrzeugsitze, insbesondere Fahrersitze in Nutzfahrzeugen müssen in der Regel besonderen Bedingungen genügen, da die Fahrer in der Regel lange Zeiten in diesen verbringen müssen. Entsprechend der Körpergröße des Fahrers muss der Fahrersitz entlang der Höhenrichtung

Z und entlang der Längsrichtung X eingestellt werden, um den Fahrer die optimale Sitzhöhe und den optimalen Abstand zur Pedalerie zu ermöglichen. Ein größerer Fahrer sitzt dabei bevorzugt entlang der Höhenachse Z weiter oben und entlang der Längsachse X weiter hinten als ein kleinerer Fahrer. Gängige Fahrersitze mit aufrechter Sitzposition bieten in der Regel die Möglichkeit die Sitzhöhenposition einzustellen. Eine solche Einstellung erfolgt in den meisten Anwendungsfällen durch eine Verlagerung des Sitzes nahezu senkrecht in vertikaler Richtung. Nach Einstellung der Sitzhöhe muss in einem weiteren Schritt dann die Sitzposition in Längsrichtung X angepasst werden. Ist ein häufiger Fahrerwechsel notwendig, kann eine solche Prozedur als umständlich empfunden werden. DE 29824882 zeigt eine Vorrichtung zur Einstellung einer Sitzposition für einen Fahrzeugsitz, wobei die Vorrichtung zumindest ein Trägerelement für ein Sitzteil umfasst und mit einem Sitzunterbau verbindbar ist, wobei die Vorrichtung zumindest einen ersten Schenkel und zumindest einen zweiten Schenkel umfasst, wobei die Schenkel drehbar an dem Sitzunterbau und dem zumindest einem Trägerelement anordenbar sind.

Aufgabe der vorliegenden Erfindung ist es einen Fahrzeugsitz bereitzustellen, welcher die eingangs genannten Nachteile überwindet.

Die Aufgabe wird gelöst von einer Vorrichtung zur Einstellung einer Sitzposition für einen Fahrzeugsitz mit den Merkmalen des Anspruchs 1.

Eine Verlagerung des zumindest einen Trägerelements hat demnach eine entsprechende Verlagerung des auf dem Trägerelement angeordneten Sitzteils zur Folge. Die erfindungsgemäße Vorrichtung dient demnach zur Einstellung der Sitzposition entlang der Höhenachse Z mit synchroner Korrektur der Sitzposition entlang der Längsachse X. Zur Anpassung der Sitzposition entlang der Höhenachse Z und entlang der Längsachse X muss demnach nur die Winkeleinstelleinrichtung betätigt werden. Vorteilhafterweise wird der Winkel α durch die Winkeleinstelleinrichtung gehalten bis diese wieder betätigt wird. Die Winkeleinstelleinrichtung kann demnach auch als Winkelfeststelleinrichtung betrachtet werden.

Vorzugsweise ist ein Bedienelement vorgesehen, mittels welchem die Winkeleinstelleinrichtung bedient werden kann. Zur Anpassung der Sitzposition muss demnach nur eine Bedieneinrichtung betätigt werden.

Die Vorrichtung, beziehungsweise der Fahrzeugsitz, erstrecken sich entlang einer Höhenachse Z. Eine Verlagerung entlang der Höhenachse Z kann dabei nach unten, also in Richtung des Fahrzeugbodens oder nach oben erfolgen. Die Vorrichtung, beziehungsweise der Fahrzeugsitz, erstrecken sich ebenso entlang einer Längsachse X. Eine Verlagerung entlang der Längsachse X kann dabei nach vorne, also in Richtung zu der Pedalerie oder nach hinten erfolgen. Schließlich erstrecken sich die Vorrichtung, beziehungsweise der Fahrzeugsitz, entlang einer Breitenachse Y.

Der im Folgenden verwendet Ausdruck "im Wesentlichen" soll dahingehend auszulegen sein, dass auch geringfügige Toleranzabweichungen mit beansprucht werden. So kann die Abweichung einen Winkel von bevorzugt kleiner 10°, weiter bevorzugt kleiner 7,5°, noch weiter bevorzugt kleiner 5° betragen.

Durch eine Einstellung des Winkels α wird demnach die Ausrichtung des zumindest einen ersten Schenkels verändert. Demnach wird vorteilhafterweise der erste Schenkel um eine entsprechende Drehrichtung gedreht, beziehungsweise rotiert. Durch die mechanische Kopplung zwischen dem zumindest einen ersten Schenkel und dem zumindest einen zweiten Schenkel wird die Drehung des zumindest einen ersten Schenkels auf den zumindest einen zweiten Schenkel übertragen. Demnach bewegt, beziehungswese dreht sich der zumindest eine zweite Schenkel analog zu dem zumindest einen ersten Schenkel. Aus der Bewegung der Gesamtheit des zumindest einen ersten Schenkels und des zumindest einen zweiten Schenkels resultiert vorteilhafterweise die Verlagerung des zumindest einen Trägerelements, beziehungsweise des Sitzteils. Demnach kann die Winkeleinstelleinrichtung vorteilhafterweise lediglich auf den zumindest einen ersten Schenkel direkt einwirken. Vorzugsweise wirkt die Winkeleinstelleinrichtung durch die genannte mechanische Kopplung indirekt auch auf den zumindest einen zweiten Schenkel.

Vorzugsweise verursacht eine Änderung des Winkels a, welche eine Verlagerung des zumindest einen Trägerelements, beziehungsweise des Sitzteils entlang der Höhenachse Z nach unten, verursacht zugleich eine Verlagerung des zumindest einen Trägerelements, beziehungsweise des Sitzteils entlang der Längsachse X nach vorne. Vorzugsweise verursacht eine Änderung des Winkels a, welche eine Verlagerung des zumindest einen Trägerelements entlang der Höhenachse Z nach oben verursacht, zugleich eine Verlagerung des zumindest einen Trägerelements entlang der Längsachse X nach hinten. Durch eine solche synchronisierten Verstellung entlang der Höhenachse Z und gleichzeitig entlang der Längsachse X erfolgt eine schnelle ergonomische Anpassung der Sitzposition für kleine und große Fahrer. In der Regel benötigen kleine Fahrer niedrigere Sitzhöhen und müssen zugleich entlang der Längsachse X weiter vorne sitzen. Im Gegensatz dazu müssen sich große Fahrer entlang der Höhenachse Z weiter oben und entlang der Längsachse X weiter hinten platzieren. Die Sitzposition kann demnach durch eine Betätigung der Winkeleinstelleinrichtung zugleich nach unten und nach vorne oder nach oben und nach hinten geändert werden. Hierdurch wird eine äußerst schnelle und einfache Anpassung der Sitzposition ermöglicht.

Vorzugsweise kann der Fahrzeugsitz noch zumindest eine zusätzliche Einstelleinrichtung für die Sitzposition entlang der Längsachse X aufweisen, mittels welcher eine zusätzliche Einstellung der Sitzposition ermöglicht wird. Hierdurch wird eine individuelle Einstellung der Sitzposition ermöglicht.

Nach einer besonders bevorzugten Ausführungsform ist der zumindest eine erste Schenkel entlang der Längsachse X hinter dem zumindest einem zweiten Schenkel angeordnet. Dabei ist es von Vorteil, dass der zumindest eine erste Schenkel entlang der Längsachse mit dem zumindest einen zweiten Schenkel mittels einer ersten Längsverbindung verbunden ist. Vorteilhafterweise ist die erste Längsverbindung durch das zumindest eine Trägerelement oder durch das Sitzteil realisiert. Ferner ist es von Vorteil, dass der zumindest eine erste Schenkel und der zumindest eine zweite Schenkel entlang der Längsachse X mittels einer zweiten Längsverbindung verbunden sind. Vorzugsweise ist die zweite Längsverbindung durch den Sitzunterbau realisiert. Vorzugsweise umfasst die mechanische Kopplung die erste und die zweite Längsverbindung. Vorteilhafterweise sind die erste und Längsverbindung starre Verbindungen und somit nicht in Ihrer Länge veränderbar.

Nach einer weiteren bevorzugten Ausführungsform weisen der zumindest eine erste Schenkel und der zumindest eine zweite Schenkel jeweils einen ersten Abschnitt und einen zweiten Abschnitt auf. Vorzugsweise schließen der erste und der zweite Abschnitt einen Winkel β ein. Vorteilhafterweise sind hierdurch der zumindest eine erste Schenkel und der zumindest eine zweite Schenkel im Wesentlichen L-förmig ausgestaltet.

Vorteilhafterweise erstreckt sich der Winkel α zwischen einer Mittelachse des ersten Schenkels 6 und einer fiktiven Bezugslinie des Trägerelements, welche im Wesentlichen senkrecht zu dem Sitzteil verläuft. Der Winkel α liegt in einem Bereich zwischen 0° und 140°. Bevorzugt liegt der Winkel α in einem Bereich zwischen 0° und 120°. Weiter bevorzugt liegt der Winkel α in einem Bereich zwischen 0°und 90°. Vorteilhafterweise sind ist die Änderung der Sitzposition entlang der Höhenachse Z und entlang der Längsachse X proportional zu einer Änderung des Winkles a.

Vorzugsweise ist zwischen dem ersten Abschnitt und dem zweiten Abschnitt ein Knickbereich vorgesehen.

Nach einer weiteren bevorzugten Ausführungsform sind der zumindest eine erste Schenkel und der zumindest eine zweite Schenkel um jeweils eine Drehachse relativ zu dem Trägerelement drehbar gelagert. Vorteilhafterweise sind der zumindest eine erste Schenkel und der zumindest eine zweite Schenkel um jeweils eine weitere Drehachse relativ zu dem Sitzunterbau drehbahr gelagert. Vorzugsweise ist in einem oberen Endbereich des ersten Abschnitts die Drehachse bezüglich der Drehung relativ zu dem Trägerelement angeordnet. Bevorzugt ist die Drehachse bezüglich der Drehung relativ zu dem Sitzunterbau in dem Knickbereich angeordnet.

Nach einer weiteren bevorzugten Ausführungsform weisen der erste Abschnitt des zumindest einen ersten Schenkels und der erste Abschnitt des zumindest einen zweiten Schenkels eine gleiche Länge auf. Vorzugsweise liegen die Drehachsen bezüglich der Drehung relativ zu dem Trägerelement des zumindest einen ersten Schenkels und des zumindest einen zweiten Schenkels auf einer ersten fiktiven oder realen Verbindungslinie. Weiterhin ist es bevorzugt, dass die Drehachsen bezüglich der Drehung relativ zu dem Sitzunterbau des zumindest einen ersten Schenkels und des zumindest einen zweiten Schenkels auf einer zweiten fiktiven oder realen Verbindungslinie liegen. Vorteilhafterweise bilden die erste Verbindungslinie, die zweite Verbindungslinie und die ersten Abschnitte des zumindest einen ersten Schenkels und des zumindest einen zweiten Schenkels ein Trapez. Ein solche Trapezform begünstigt die gleichzeitige Verlagerung der Sitzfläche entlang der Höhenachse Z und der Längsachse X. Das Trapez kann ein Parallelogramm sein, wenn die ersten Abschnitte jeweils eine gleiche Länge aufweisen und weiterhin die erste und die zweite Verbindungslinie die gleiche Länge aufweisen.

Die Verbindungslinien, welche das vorteilhafte Trapez beziehungsweise Parallelogramm bilden, können demnach reale Verbindungslinien sein, d. h. die Verbindungslinie ist von einem entsprechenden Element, beispielsweise dem Sitzunterbau oder dem Trägerelement umfasst. Denkbar wäre jedoch auch, dass zwar Verbindungen zwischen den Schenkel existieren, diese jedoch nicht direkte Verbindungen zwischen den Drehachsen darstellen. Demnach könnten beispielsweise die eigentlichen Verbindungen zwischen den Drehachsen entlang der Höhenachse Z über oder unter der fiktiven Verbindungslinie liegen.

Nach einer weiteren bevorzugten Ausführungsform ist zwischen dem zweiten Abschnitt des ersten Schenkels und dem zweiten Abschnitt des zweiten Schenkels ein Verbindungselement vorgesehen. Bevorzugt umfasst die mechanische Kopplung zwischen dem zumindest einen ersten Schenkel und dem zumindest einen zweiten Schenkel eine Verbindung der zweiten Abschnitte mittels des Verbindungselements. Vorzugsweise ist der jeweilige zweite Abschnitt um eine Drehachse relativ zu dem Verbindungselement drehbar. Vorteilhafterweise ist die Drehachse bezüglich einer Drehung des zumindest einen ersten oder des zumindest einen zweiten Schenkels relativ zu dem Verbindungselement in einem unteren Endbereich des jeweiligen zweiten Abschnitts angeordnet.

Nach einer weiteren bevorzugten Ausführungsform weisen der zweite Abschnitt des zumindest einen ersten Schenkels und der zweite Abschnitt des zumindest einen zweiten Schenkels eine gleiche Länge auf. Vorzugsweise liegen die Drehachsen bezüglich der Drehung des zumindest einen ersten Schenkels und des zumindest einen zweiten Schenkels relativ zu dem Verbindungselement auf einer dritten fiktiven oder realen Verbindungslinie. Dabei ist es bevorzugt, dass die zweite Verbindungslinie, die dritte Verbindungslinie und die zweiten Abschnitte des zumindest einen ersten Schenkels und des zumindest einen zweiten Schenkels ein zweites Trapez bilden. Das Trapez kann ein Parallelogramm sein, wenn die zweiten Abschnitte jeweils eine gleiche Länge aufweisen und weiterhin die zweite und die dritte Verbindungslinie die gleiche Länge aufweisen.

Denkbar wäre natürlich auch, dass der zweite Abschnitt des zumindest einen ersten Schenkels und der zweite Abschnitt es zumindest einen zweiten Schenkels unterschiedliche Längen aufweisen. Vorzugsweise könnte der zumindest eine zweite Schenkel einen zweiten Abschnitt aufweisen, welcher eine größere Länge als der zweite Abschnitt des zumindest einen ersten Schenkels. Somit würden vorteilhafterweise die zweite Verbindungslinie, die dritte Verbindungslinie und die zweiten Abschnitte des zumindest einen ersten Schenkels und des zumindest einen zweiten Schenkels ein allgemeines Viereck anstatt des zweiten Trapezes bilden. Durch eine solche vorteilhafte Ausgestaltung ist das Sitzteil, beziehungsweise die Sitzfläche relativ zur Längsachse X geneigt. Bei einer entsprechenden Höhenveränderung, beziehungsweise einer Verlagerung des Sitzteils entlang der Höhenachse Z erfährt das Sitzteil auch eine auch eine Neigungsveränderung.

Nach einer weiteren bevorzugten Ausführungsform umfasst die mechanische Kopplung zwischen dem zumindest einen ersten Schenkel und dem zumindest einen zweiten Schenkel eine starre dritte Längsverbindung entlang der Längsachse X zwischen dem zweiten Abschnitt des zumindest einen ersten Schenkel und dem zweiten Abschnitt des zumindest einen zweiten Schenkels. Eine derartige vorteilhafte starre Verbindung kann vorzugsweise durch ein Verbindungselement, welches in seiner Länge nicht änderbar ist, bereitgestellt werden. Das vorteilhafte zweite Trapez ist somit nicht veränderbar. Die Neigung des Sitzteils, beziehungsweise der Sitzfläche relativ zu der Längsachse X wäre somit vorteilhafterweise nicht veränderbar. Eine vorteilhafte horizontale Ausrichtung, beziehungsweise eine Ausrichtung des Sitzteils, beziehungsweise der Sitzfläche parallel zu der Längsachse X wäre demnach nicht veränderbar.

Nach einem weiteren Gedanken der Erfindung umfasst die mechanische Kopplung zwischen dem zumindest einen ersten Schenkel und dem zumindest einen zweiten Schenkel eine dritte Längsverbindung entlang der Längsachse X zwischen dem zweiten Abschnitt des ersten Schenkel und dem zweiten Abschnitt des zweiten Schenkels, welche in der Länge modifizierbar ist. Dies könnte durch ein vorteilhaftes Verbindungselement in Form einer blockierbaren Gasfeder oder in Form eines Spindelhubgetriebes realisiert werden.

Nach einem weiteren Gedanken der Erfindung ist der zumindest eine zweite Schenkel indirekt mit dem zumindest einen Trägerelement verbunden. Vorteilhafterweise ist zumindest der eine zweite Schenkel über ein Beabstandungselement, beziehungsweise ein Pleuel mit dem zumindest einem Trägerelement verbunden. Es sind somit vorteilhafterweise zwei Drehachsen bezüglich einer Drehung des zweiten Schenkels relativ zu dem Trägerelement vorgesehen. Diese beiden Drehachsen sind vorzugsweise entlang der Höhenachse Z übereinander angeordnet, beziehungsweise beabstandet. Hierdurch ergibt sich ein vorteilhafter weiterer Freiheitsgrad, welcher zu der Einstellung einer Neigung des Sitzteil verwendbar ist.

Nach einer weiteren bevorzugten Ausführungsform sind zwei erste Schenkel und zwei zweite Schenkel vorgesehen. Vorzugsweise sind die beiden ersten Schenkel entlang der Breitenachse Y voneinander beabstandet. Bevorzugt sind die beiden ersten Schenkel um die gleichen Drehachsen drehbar. Vorteilhafterweise sind die beiden zweiten Schenkel entlang der Breitenachse Y voneinander beabstandet. Bevorzugt sind beide zweiten Schenkel um gleiche Drehachsen drehbar.

Die genannten Drehachsen, um welche die Paare der ersten Schenkel beziehungsweise der zweiten Schenkel jeweils drehbar sind, können vorzugsweise Achsen sein, welche in einer entsprechenden Drehlagerung der Schenkel gelagert sind. Dabei kann die jeweilige Drehachse eine durchgängige reale Achse sein, welche in der entsprechenden Drehlagerung der Schenkel gelagert ist. Die Drehachse kann auch eine durchgängige fiktive Achse sein, welche sich durch entsprechende Drehlagerungen der beiden Schenkel erstreckt.

Vorzugsweise sind die entlang der Breitenachse Y sich gegenüberliegenden Schenkel mittels zumindest einer Querverbindung verbunden. Diese Querverbindungen können vorteilhafterweise durch das Trägerelement oder durch das Sitzteil realisiert werden. Denkbar wäre jedoch auch, dass die Querverbindungen durch anderweitige Verstrebungen Stangen etc. realisiert werden.

Nach einer weiteren bevorzugten Ausführungsform muss zumindest das eine Trägerelement ein plattenartiges Element sein, welches sich entlang der Langsachse X und der Breitenachse Y erstreckt. Vorzugsweise sind an diesem plattenartigen Element unterseitig die ersten und die zweiten Schenkel angeordnet. Demnach ist die erste, beziehungsweise sind die ersten Längsverbindung(en) durch das plattenartige Element realisiert. Vorteilhafterweise ist oberseitig auf dem plattenartigen Element das Sitzteil angeordnet. Es wäre jedoch auch denkbar, dass mehrere Trägerelemente vorgesehen sind. Die jeweiligen Querverbindungen und die ersten Längsverbindungen würden dann vorteilhafterweise durch das Sitzteil realisiert.

Erfindungsgemäß umfasst die Winkeleinstelleinrichtung eine Feststelleinrichtung, welche einen eingestellten Winkel α feststellt. Durch die Feststelleinrichtung wird demnach vorzugsweise die Ausrichtung des zumindest einen ersten Schenkels relativ zu dem Trägerelement, beziehungsweise relativ zu dem Sitzunterbau festgelegt und gehalten. Ebenso wird durch die mechanische Kopplung zwischen dem zumindest einen ersten und dem zumindest einen zweiten Schenkel die Ausrichtung des zumindest einen zweiten Schenkels relativ zu dem Trägerelement, beziehungsweise relativ zu dem Sitzunterbau festgelegt und gehalten. Eine solche Feststelleinrichtung kann vorzugsweise ein sogenannter "Recliner" sein. Vorteilhafterweise umfasst die Winkeleinstelleinrichtung einen Antrieb, mittels welchem die Feststelleinrichtung angetrieben wird, um den Winkel α zu verändern. Die Winkeleinstelleinrichtung ist vorzugsweise eine elektrisch ansteuerbare Getriebeeinheit. Vorzugsweise umfasst die Winkeleinstelleinrichtung eine Steuereinheit, welche den Antrieb ansteuert. Dabei ist es von Vorteil, dass in der Steuereinheit bestimmte Sitzposition speicherbar sind. Der Nutzer kann dann zwischen den gespeicherten Positionen wechseln. Vorzugsweise ist eine Bedieneinrichtung vorgesehen, mittels welcher der Nutzer entsprechende Eingaben machen kann.

Nach einer weiteren bevorzugten Ausführungsform ist die Vorrichtung ein modulares Bauelement ist. Demnach ist die Vorrichtung zur Einstellung einer Sitzposition für einen Fahrzeugsitz vorteilhafterweise nicht in andere Baukomponenten eines Fahrzeugsitzes integriert. Vorteilhafterweise kann die Vorrichtung zwischen dem Sitzunterbau und dem Sitzteil angeordnet werden. Es müssen nur entsprechende Befestigungselemente bereitgestellt werden, beziehungsweise vorgesehen sein. Hierdurch kann der Aufbau des Sitzunterbaus vereinfacht werden. Eine vorteilhafte Vertikalfederung, welche durch den modularen Aufbau von der Vorrichtung unabhängig ist, könnte somit auf ihre Hauptaufgabe, der Isolation der Schwingungen und den Erhalt des Höhenniveaus reduziert werden. Durch die modulare Ausgestaltung der Vorrichtung wird es auch ermöglicht, bereits vorhandene Fahrzeugsitze auf einfachste Art und Weise mit dieser Vorrichtung nachzurüsten.

Die vorliegende Aufgabe wird ebenso gelöst von einem Fahrzeugsitz mit einer Vorrichtung nach einer der beschriebenen Ausführungsformen.

Der Fahrzeugsitz kann dabei mit allen bereits obig im Rahmen der Vorrichtung zur Einstellung einer Sitzposition für einen Fahrzeugsitz beschriebenen Merkmalen einzeln oder in Kombination miteinander ausgestattet sein und umgekehrt.

Der Fahrzeugsitz kann vorteilhafterweise ein Scherengestell umfassen, mittels welchem der Fahrzeugsitz an dem Fahrzeug, beziehungsweise dem Karosserieboden befestigt ist. Ferner ist es von Vorteil, dass der Fahrzeugsitz eine Feder und/oder Dämpfungseinrichtung zur Federung/ Dämpfung von vertikalen und/oder horizontalen Schwingungen umfasst. Aufgrund des bereits beschriebenen bevorzugten modularen Aufbaus kann der Sitzunterbau einfacher ausgestaltet werden.

Der Fahrzeugsitz kann nach einer weiteren Ausführungsform eine Einrichtung zur Einstellung der Sitzposition entlang der Längsachse X umfassen. Dies kann beispielsweise ein Schienensystem an dem Karosserieboden sein, auf welchem der Sitzunterbau verlagerbar angeordnet ist.

Ferner ist es bevorzugt, wenn der Fahrzeugsitz eine Einrichtung zur Einstellung der Neigung des Sitzteils umfasst.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1a, 1b: eine seitliche Ansicht des Fahrzeugsitzes nach einer Ausführungsform;
- Fig.2a bis 2c: eine Ansicht des Fahrzeugsitzes nach einer Ausführungsform in verschiedenen Sitzpositionen;
- Fig.3a bis 3c: eine Ansicht des Fahrzeugsitzes nach einer Ausführungsform in verschiedenen Sitzpositionen;
- Fig.4a bis 4c: eine Ansicht des Fahrzeugsitzes nach einer Ausführungsform in verschiedenen Sitzpositionen;
- Fig.5a bis 5c: eine Ansicht des Fahrzeugsitzes nach einer Ausführungsform in verschiedenen Sitzpositionen
- Fig. 6: Detailansicht umfassend die erste Drehasche;
- Fig. 7: Verstellkurve des Fahrzeugsitzes;
- Fig.8: isometrische Ansicht der Vorrichtung zur Einstellung einer Sitzposition;
- Fig.9: isometrische Ansicht der Vorrichtung zur Einstellung einer Sitzposition;
- Fig.10: seitliche Ansicht der Vorrichtung zur Einstellung einer Sitzposition;
- Fig.11: Draufsicht der Vorrichtung zur Einstellung einer Sitzposition;
- Fig.12: seitliche Ansicht der Vorrichtung zur Einstellung einer Sitzposition;
- Fig.13: seitliche Ansicht der Vorrichtung zur Einstellung einer Sitzposition;
- Fig.14: Draufsicht der Vorrichtung zur Einstellung einer Sitzposition;

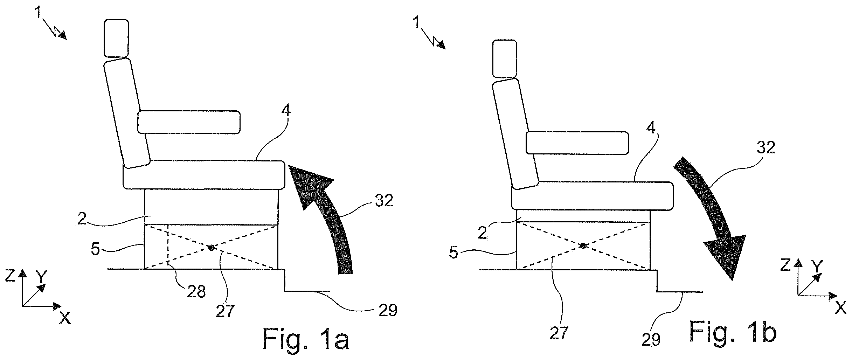

In den Figuren 1 bis 14 ist eine Vorrichtung 2 zur Einstellung einer Sitzposition für einen Fahrzeugsitz 1 dargestellt. Die Vorrichtung 2 umfasst zumindest ein Trägerelement 3 für ein Sitzteil 4 und ist mit einem Sitzunterbau 5 verbunden. Die Vorrichtung 2 umfasst zumindest einen ersten Schenkel 6 und zumindest einen zweiten Schenkel 7, wobei die Schenkel 6, 7 drehbar an dem Sitzunterbau 5 und dem zumindest einem Trägerelement 3 angeordnet sind, wobei ein erster Winkel α zwischen dem ersten Schenkel 6 und dem Trägerelement 3 durch eine Winkeleinstelleinrichtung 8 einstellbar ist, wobei der zumindest eine erste Schenkel 6 und der zumindest eine zweite Schenkel 7 mechanisch gekoppelt sind, wobei eine Änderung des Winkels α eine Verlagerung des zumindest einen Trägerelements 3 entlang einer Höhenachse Z und entlang einer Längsachse X verursacht.

Der Fahrzeugsitz, beziehungsweise die Vorrichtung zur Einstellung der Sitzposition erstrecken sich entlang eine Höhenachse Z einer Längsachse X und einer Breitenachse Y.

Der Fahrzeugsitz 1 kann selbstverständlich eine Rückenlehne, ein Kopfteil und Armlehnen umfassen, wie dies beispielsweise in den Figuren 1a und 1b dargestellt ist. Das Sitzteil 4 kann ein Schalenelement mit einem darauf angeordneten Polsterelement oder lediglich ein Polsterelement umfassen. Der Sitzunterbau 5 kann vorteilhafterweise ein Scherengestell 27 umfassen, mittels welchem der Fahrzeugsitz 1 an dem Fahrzeug beziehungsweise dem Karosserieboden 29 befestigt ist. Ferner ist es von Vorteil, dass der Sitzunterbau 5 eine Feder und/oder Dämpfungseinrichtung 28 zur Federung/ Dämpfung von vertikalen und/oder horizontalen Schwingungen umfasst. Dies ist in den Figuren 1a und 1b angedeutet.

Wie aus den Figuren 1 bis 14 ersichtlich, ist die Vorrichtung 1 zur Einstellung einer Sitzposition ein modulares Bauelement und kann somit auf einfachste Weise in einem Fahrzeugsitz 1 integriert werden. Weiterhin können ältere Fahrzeugsitze mit solch einem modularen Bauelement nachgerüstet werden.

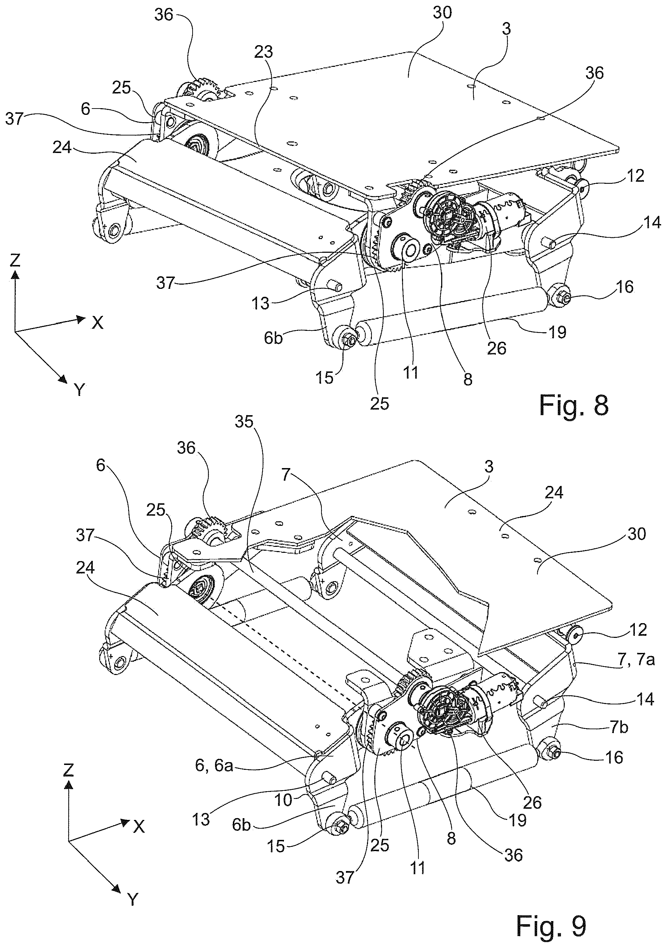

Der zumindest eine erste Schenkel 6 ist entlang der Längsachse X hinter dem zumindest einen zweiten Schenkel 7 angeordnet. Ferner sind der zumindest eine erste Schenkel 6 und der zumindest eine zweite Schenkel 7 entlang der Längsachse X mittels einer ersten Längsverbindung 9 verbunden. Die erste Längsverbindung 9 wird durch das zumindest eine Trägerelement 3 oder durch das Sitzteil 4 realisiert. In den Figuren 8 bis 14 umfasst das Trägerelement 3 ein plattenartiges Element 30, auf welchem das Sitzteil angeordnet werden kann. Die erste Längsverbindung 9 ist somit durch das plattenartige Element 30 gegeben.

Ferner ist der zumindest eine erste Schenkel 6 entlang der Längsachse X mit dem zumindest einem zweiten Schenkel 7 mittels einer zweiten Längsverbindung 10 verbunden, welche durch den Sitzunterbau 5 realisiert ist.

Der zumindest eine erste Schenkel 6 und der zumindest eine zweite Schenkel 7 weisen jeweils einen ersten Abschnitt 6a, 7a und einen zweiten Abschnitt 6b, 7b auf. Der erste Abschnitt 6a, 7a und der zweite Abschnitt 6b, 7b erstrecken sich im Wesentlichen geradlinig und schließen dabei einen Winkel β ein, wodurch der zumindest eine erste Schenkel 6 und der zumindest eine zweite Schenkel 7 im Wesentlichen L-förmig ausgestaltet sind. Der Winkel β ist demnach in einem Bereich zwischen 20° und 100° bevorzugt zwischen 45° und 90°, weiter bevorzugt zwischen 95° und 85°, weiter bevorzugt 90°. Demnach ist zwischen dem ersten Abschnitt 6a, 7a und dem zweiten Abschnitt 6b, 6b ein Knickbereich 6c, 7c vorgesehen.

Die Vorrichtung 1 umfasst zwei erste Schenkel 6 und zwei zweite Schenkel 7. Die beiden ersten Schenkel 6 und die beiden zweiten Schenkel 7 sind jeweils entlang der Breitenachse Y voneinander beabstandet. Die beiden sich gegenüberliegenden ersten Schenkel 7 und die beiden sich gegenüberliegenden zweiten Schenkel 7 sind jeweils im Wesentlichen identisch. Die weitere Beschreibung der Schenkel 6, 7 in Form von zumindest einem Schenkel 6, 7 ist demnach auf das jeweilige Paar an Schenkeln anzuwenden. Die beiden ersten Schenkel 6 und die beiden zweiten Schenkel 7 sind weiterhin um die jeweils gleichen Drehachsen 11, 12, 13, 14, 15, 16 drehbar. Fernern sind die entlang der Breitenachse Y sich gegenüberliegenden Schenkel 6, 7 mittels zumindest einer Querverbindung 24 verbunden. Eine solche Querverbindung 24 ist durch das Trägerelement 3, welches als plattenartiges Element 30 ausgebildet ist, realisiert. Ferner können noch weitere Streben, Platten etc. vorhanden sein, welche ebenso die Querverbindung 24 ausbilden.

Der zumindest eine erste Schenkel 6 ist um eine erste Drehachse 11 relativ zu dem Trägerelement 3 drehbar gelagert. Der zumindest eine zweite Schenkel 7 ist um eine zweite Drehachse 12 relativ zu dem Trägerelement 3 drehbar gelagert. Der jeweilige erste Abschnitt 6a, 7a des zumindest einen ersten Schenkels 6 und des zumindest einen zweiten Schenkels 7 weist einen oberen Endbereich auf, in welchem die Drehachse 11, 12 bezüglich der Drehung relativ zu dem Trägerelement 3 angeordnet ist.

Der zumindest eine erste Schenkel 6 ist um eine dritte Drehachse 13 relativ zu dem Sitzunterbau 5 drehbar gelagert. Der zumindest eine zweite Schenkel 7 ist um eine vierte Drehachse 14 relativ zu dem Sitzunterbau 5 drehbar gelagert. Die dritte Drehachse 13 und die vierte Drehachse 14 sind in dem jeweiligen Knickbereich 6c, 7c angeordnet. Demnach würde sich der erste Abschnitt 6a des ersten Schenkels 6 im Wesentlichen zwischen der ersten Drehachse 11 und der dritten Drehachse 13 erstrecken. Der erste Abschnitt 7a des zweiten Schenkels 7 erstreckt sich im Wesentlichen zwischen der zweiten Drehachse 12 und der vierten Drehachse 14.

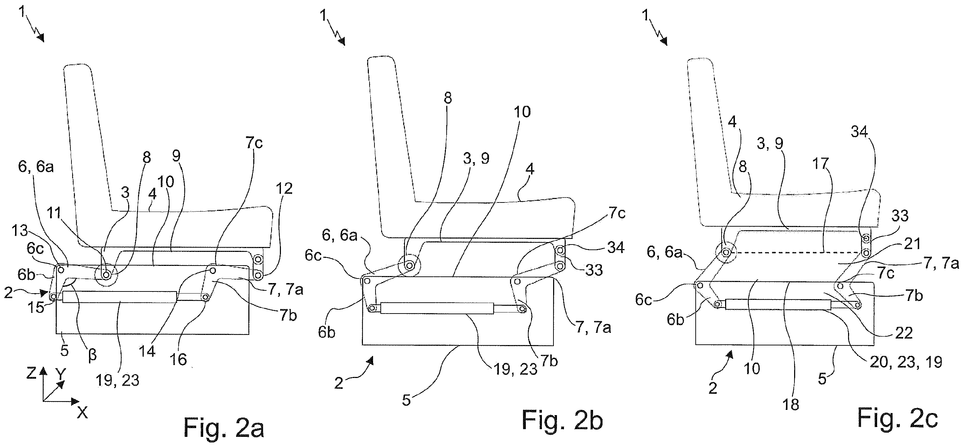

Der erste Abschnitt 6a des zumindest einen ersten Schenkels 6 und der erste Abschnitt 7a des zumindest einen zweiten Schenkels 7 weisen eine gleiche Länge auf. Die ersten Drehachse 11 und die zweite Drehachse 12 liegen auf einer ersten fiktiven oder realen Verbindungslinie 17. Ebenso liegen die dritte Drehachse 13 und die vierte Drehachse 14 auf einer zweiten fiktiven oder realen Verbindungslinie 18. Die erste Verbindungslinie 17, die zweite Verbindungslinie 18 und die ersten Abschnitte 6a, 7a des zumindest einen ersten Schenkels 6 und des zumindest einen zweiten Schenkels 7 bilden somit ein erstes Trapez 21. Dies ist gut in Figur 2c erkennbar. Da die beiden Verbindungslinien 17 und 18 die gleiche Länge aufweisen, ist das Trapez 21 ein Parallelogramm.

Zwischen dem zweiten Abschnitt 6b des ersten Schenkel 6 und dem zweiten Abschnitt 7b des zweiten Schenkels 7 ist ein Verbindungselement 19 vorgesehen. Der erste Schenkel 6 ist um eine fünfte Drehachse 15 relativ zu dem Verbindungselement 19 drehbar gelagert. Der zweite Schenkel 7 ist um eine sechste Drehachse 16 relativ zu dem Verbindungselement 19 drehbar gelagert. Die fünfte Drehachse 15 und die sechste Drehachse 16 sind jeweils in einem unteren Endbereich der zweiten Abschnitte 6b, 7b angeordnet. Der jeweilig zweite Abschnitt 6b, 7b erstreckt sich somit im Wesentlichen zwischen der dritten Drehachse 13 und der fünften Drehachse 15, beziehungsweise zwischen der vierten Drehachse 14 und der sechsten Drehachse 16.

Aus Figur 9 ist ersichtlich, dass in den Endbereichen der beiden ersten Schenkel 6, in den Endbereichen der beiden zweiten Schenkel 7 sowie in den Knickbereichen 6c, 7c jeweils ein Drehgelenk oder eine Drehlagerung angeordnet ist. Die jeweilige Drehachse 11, 12, 13, 14, 15, 16 ist demnach fiktiv. Selbstverständlich könnte auch jeweils eine durchgehende reale Drehachse 11, 12, 13, 14 vorgesehen sein.

Die fünfte Drehachse 15 und die sechste Drehachse16 liegen auf einer dritten fiktiven oder realen Verbindungslinie 20.

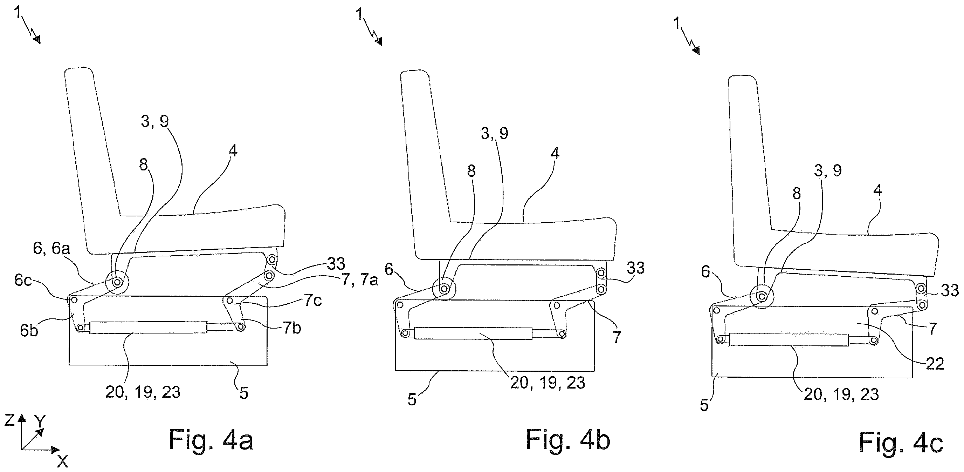

In den Ausführungsformen gemäß den Figuren 2a bis 2c und 4a bis 4c weisen der zweite Abschnitt 6b des zumindest einen ersten Schenkels 6 und der zweite Abschnitt 7b des zumindest einen zweiten Schenkels 7 eine gleiche Länge auf. Demnach bilden die zweite Verbindungslinie 18, die dritte Verbindungslinie 20 und die zweiten Abschnitte 6b, 7b ein zweites Trapez 22.

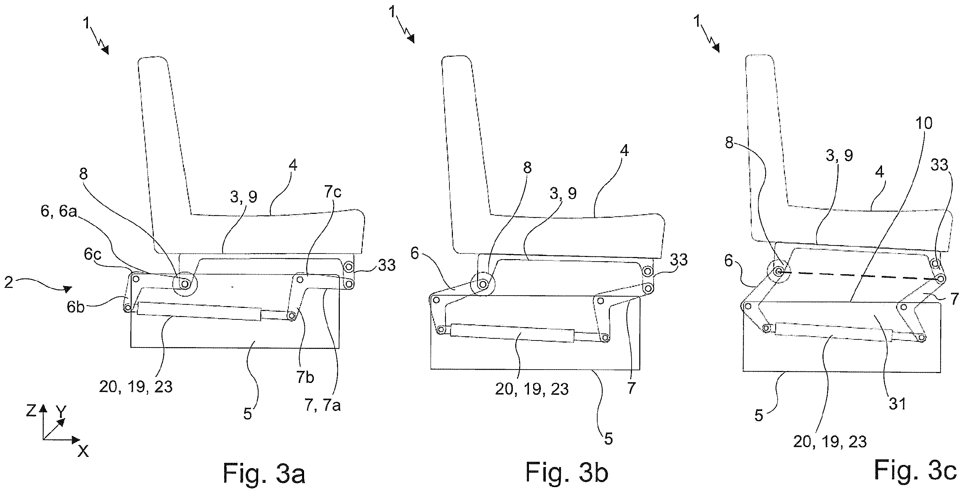

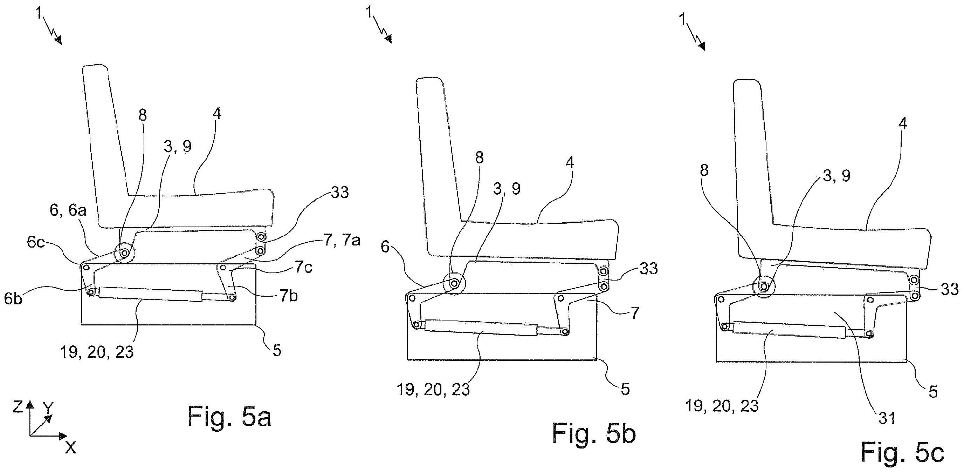

In den Ausführungsformen gemäß den Figuren 3a bis 3c und 5a bis 5c hat der zweite Abschnitt 7b des zumindest einen zweiten Schenkels 7 eine größere Länge als der zweite Abschnitt 6b des zumindest einen ersten Schenkels 6. Hierdurch kann bei einer Änderung des Winkels α neben eine Änderung der Sitzposition entlang der Höhenachse Z und der Änderung der Sitzposition entlang der Längsachse X auch eine Änderung der Neigung des Sitzteils 4, beziehungsweise des Trägerelements 3 verursacht werden. Die zweite Verbindungslinie 18, die dritte Verbindungslinie 20 und die zweiten Abschnitte 6b, 7b bilden demnach ein allgemeines Viereck 31.

Die erste Verbindungslinie 18 kann demnach der ersten Längsverbindung 9 entsprechen. In den Figuren 1 bis 14 ist jedoch gezeigt, dass die erste Längsverbindung 9 und die erste fiktive Verbindungslinie 18 entlang der Höhenachse Z voneinander beabstandet sind. Die zweite Verbindungslinie 18 entspricht der zweiten Längsverbindung 10, wobei die Erfindung nicht hierauf beschränkt ist.

Ferner ist zwischen dem zweiten Abschnitt 6b des zumindest einen ersten Schenkels 6 und dem zweiten Abschnitt 7b des zumindest einen zweiten Schenkels 7 eine dritte Längsverbindung 23 entlang der Längsachse X vorgesehen. Diese dritte Längsverbindung 23 wird durch das Verbindungselement 19 realisiert. Die dritte Längsverbindung 23 kann dabei eine starre Verbindung sein oder eine Verbindung, welche in ihrer Länge modifizierbar ist. Die dritte Verbindungslinie 20 kann, muss aber nicht, der dritten Längsverbindung 23 entsprechen.

Die mechanische Kopplung umfasst vorzugsweise die erste Längsverbindung 9, die zweite Längsverbindung 10, die dritte Längsverbindung 23. Ferner kann bei der Ausführungsform, in welcher die ersten Schenkel 6 und zweiten Schenkel 7 als Schenkelpaare ausgeführt sind, die Querverbindung 24 zu der mechanischen Kopplung zugehörig betrachtet werden.

Die starre dritte Längsverbindung 23 ist beispielsweise in den Figuren 2a bis 2c ersichtlich. Hier haben die zweite Verbindungslinie 18 und die dritte Verbindungslinie 20 weiterhin die gleichen Längen. Demnach ist das zweite Trapez 22 ein Parallelogramm. Eine solche starre Verbindung kann durch ein starres Verbindungselement 19 realisiert werden, welches als Strebe oder Ähnliches ausgebildet ist.

In den Ausführungsformen nach den Figuren 4a bis 4c und 5a bis 5c ist die dritte Längsverbindung 23 modifizierbar. Das Verbindungselement 19 kann ein entsprechendes in der Länge modifizierbares Element sein. Ein derartiges Element ist beispielsweise eine blockierbare Gasfeder oder ein Spindelhubantrieb. Durch eine Modifikation der Länge des Verbindungselements 19, beziehungsweise der dritten Längsverbindung 23 kann eine Neigung des Sitzteils 4, beziehungsweise des Trägerelements 3 modifiziert werden.

Der zumindest eine erste Schenkel 6, beziehungsweise das entsprechende Schenkelpaar ist/sind direkt über eine Drehlagerung an dem Trägerelement 3 angeordnet beziehungsweise drehbar gelagert. Die erste Drehachse 11 verläuft entsprechend zentrisch durch diese Drehlagerung.

Der zumindest eine zweite Schenkel 7, beziehungsweise das entsprechende Schenkelpaar können ebenso direkt über eine Drehlagerung an dem Trägerelement 3 angeordnet, beziehungsweise gelagert sein. Dementsprechend verläuft die zweite Drehachse 12 entsprechend zentrisch durch diese Drehlagerung.

Der zumindest eine zweite Schenkel 7, beziehungsweise das entsprechende Schenkelpaar kann auch indirekt über eine Drehlagerung an dem Trägerelement 3 angeordnet, beziehungsweise gelagert sein. Diese indirekte Lagerung wird durch ein Beabstandungselement 33, beziehungsweise ein Pleuel realisiert. Demnach ist das Beabstandungselement 33 über eine Drehlagerung an dem zweiten Schenkel 7 angeordnet. Die zweite Drehachse 12 verläuft entsprechend zentrisch durch diese Drehlagerung. Weiterhin ist das Beabstandungselement 33 mittels einer weiteren Drehlagerung an dem Trägerelement 3 angeordnet. Das Beabstandungselement 33, beziehungsweise Pleuel ist somit relativ zu dem Trägerelement 3 um eine siebte Drehachse 34 drehbar gelagert. Die siebte Drehachse 34 ist dabei von der zweiten Drehachse 12 beabstandet. Durch ein derartiges Beabstandungselement 33 ist ein weiterer Freiheitsgrad bezüglich der Neigung des Sitzteils 4 vorhanden. Dies ist in den Figuren 3a bis 3c, 4a bis 4c und 5a bis 5c ersichtlich.

In der Ausführungsform anhand der Figuren 2a bis 2c ist die Kinematik der Höhenverstellung in Form eines zweiten Trapezes 22 umgesetzt. Dieses Trapez 22 ist veränderbar, um eine zusätzliche Neigungsverstellung über den Freiheitsgrad des beweglichen Pleuels 33 zu ermöglichen. Bei einer Höhenveränderung bewegt sich das Sitzteil 4 parallel zur Ausgangslage nach oben (unten), d. h. es wird keine Winkelveränderung in der Ebene XY hinsichtlich des Sitzteils 4 vorgenommen. Eine Winkelveränderung kann hierbei ausschließlich über die Veränderung der Länge des Verbindungselements 19 erfolgen. Zugleich bewegt sich das Sitzteil 4, durch die Schwenkbewegung der Schenkel 6, 6 in Längsrichtung X nach hinten (vorne). Sollte in dieser Ausführungsform keine Neigungsverstellung erforderlich sein kann die Kinematik auch als einfaches Parallelogramm ausgebildet sein. Hierbei kann auch das Pleuel 33 entfallen und wird dann direkt mit dem hierfür angepassten Trägerelement 3 über die zweite Drehachse 12 verbunden. Ebenso wird hierbei ein starres Verbindungselement 19 verwendet. In Figur 2a ist dabei eine unterste Stellung gezeigt, in welcher die geringste Sitzhöhe eingenommen wird. Ferner ist der die Sitzposition in Längsrichtung X nach vorne maximal. In Figur 2c ist dabei eine oberste Stellung gezeigt, in welcher die maximale Sitzhöhe und die maximale Sitzposition in Längsrichtung X nach hinten eingenommen wird. In Figur 2b ist eine entsprechend mittlere Sitzposition dargestellt. Die Sitzposition in Längsrichtung kann jedoch gegebenenfalls durch eine zusätzliche Einstelleinrichtung weiter modifiziert werden.

In der Ausführungsform anhand der Figuren 3a bis 3c ist die Kinematik der Höhenverstellung in Form eines allgemeinen Vierecks umgesetzt. Dies ermöglicht eine weitere Neigungsveränderung des Sitzoberteil in der XY-Ebene. Bei einer Höhenveränderung bewegt sich das Sitzteil 4 nicht parallel zur Ausgangslage nach oben (unten), d. h. es wird eine Winkelveränderung in der Ebene XY hinsichtlich des Sitzteils 4 vorgenommen. Erreicht wird dieser kinematische Ablauf durch unterschiedliche Geometrien der beiden Schenkel 6, 7. In den dargestellten Abbildungen neigt sich die Sitzfläche bei einer Höhenveränderung nach vorne, bzw. nach hinten. Es ist hier ebenso denkbar, dass eine zusätzliche Neigungsverstellung mittels eines in der Länge modifizierbaren Verbindungselements 19 vorgesehen ist. Das Verbindungselement 19 kann jedoch auch als ein starres Element vorgesehen sein. Hier ist es jedoch erforderlich, dass ein Beabstandungselement 33, beziehungsweise Pleuel vorgesehen ist. Durch eine Verschwenkung des Beabstandungselements 33 um die zweite Drehachse 12 und die siebte Drehachse 34 kann ein entsprechender Ausgleich entlang der Längsachse X erfolgen, wodurch eine Neigung des Sitzteils 4 vermieden wird. Es kann demnach eine Höhenveränderung des Sitzteils 4 parallel zur Ausgangslage nach oben (unten) vorgenommen werden, d. h. es wird keine Winkelveränderung in der Ebene XY hinsichtlich des Sitzteils 4 vorgenommen. In Figur 3a ist dabei eine unterste Stellung gezeigt, in welcher die geringste Sitzhöhe eingenommen wird. Ferner ist die Sitzposition in Längsrichtung X nach vorne maximal. In Figur 3c ist dabei eine oberste Stellung gezeigt, in welcher die maximale Sitzhöhe und die maximale Sitzposition in Längsrichtung X nach hinten eingenommen wird. Dabei ist durch eine entsprechende Drehung des Pleuels 33 das Sitzteil im Wesentlichen waagrecht. In Figur 3b ist eine entsprechend mittlere Sitzposition dargestellt. Die Sitzposition in Längsrichtung kann jedoch gegebenenfalls durch eine zusätzliche Einstelleinrichtung weiter modifiziert werden.

In der Ausführungsform anhand der Figuren 4a bis 4c ist eine Kinematik mittels eines zweiten Trapezes 22 dargestellt. In dieser Kinematik wird eine Neigungsverstellung über eine Längenänderung des Verbindungselements 19 vorgenommen. Im dargestellten Fall ist eine Winkeländerung der Ebene XY um die Y-Achse ausgehend von der Mittelstellung von ca. +/-3° vorgesehen. Das Verbindungselements 19 ist in der beschriebenen Version als blockierbare Gasfeder ausgeführt. Diese beinhaltet eine definierte Ausschubkraft und ebenfalls festgelegte Endlagen (Einlänge/Auslänge). Ebenso sind andere Ausführungen für dieses Verbindungselement 19 angedacht, wie zum Beispiel eine elektrische Variante in Form eines Spindelhubgetriebes mit der Möglichkeit der Memorisierung. In Figur 4b ist eine Sitzposition dargestellt, in welcher sich das Sitzteil im Wesentlichen horizontal, beziehungsweise parallel zu einer Ebene XY, welche durch die Längsachse X und die Breitenachse Y aufgespannt wird, ausgerichtet ist. In Figur 4a ist eine Sitzposition dargestellt, in welcher sich das Sitzteil 4 nach hinten neigt. Im Vergleich zu der Sitzposition in Figur 4b hat das Verbindungselement 19 hier eine größere Länge. In Figur 4c ist eine Sitzposition dargestellt, in welcher sich das Sitzteil 4 nach vorne neigt. Im Vergleich zu der Sitzposition in Figur 4b hat das Verbindungselement 19 hier eine geringere Länge. Auch hier wird durch eine Drehung des Pleuels 33 ein entsprechender Ausgleich der Auslenkung entlang der Längsachse ermöglicht.

In der Ausführungsform anhand der Figuren 5a bis 5c ist eine Kinematik der Höhenverstellung in Form eines allgemeinen Vierecks umgesetzt, welche eine zusätzliche Neigungsverstellung mittels eines in der Länge modifizierbaren Verbindungselements 19 ermöglicht, ähnlich zu der Ausführungsform gemäß den Figuren 4a bis 4c. Im Unterschied zu dieser Ausführungsform wird hier die Neigungsveränderung im Hub-oben-Bereich hauptsächlich genutzt, um eine Waagrechte für die Ebene XY zu ermöglichen. In den unteren bis mittleren Positionen verhält sich das System ähnlich der Ausführungsform anhand der Figuren 5a bis 5c. In Figur 4b ist eine Sitzposition dargestellt, in welcher sich das Sitzteil im wesentlichen horizontal, beziehungsweise parallel zu einer Ebene XY, welche durch die Längsachse X und die Breitenachse Y aufgespannt wird, ausgerichtet ist. In Figur 5b ist eine Sitzposition dargestellt, in welcher sich das Sitzteil im Wesentlichen horizontal, beziehungsweise parallel zu der Ebene XY ausgerichtet ist. In Figur 5a ist eine Sitzposition dargestellt, in welcher sich das Sitzteil 4 nach hinten neigt. Im Vergleich zu der Sitzposition in Figur 5b hat das Verbindungselement 19 hier eine größere Länge. In Figur 5c ist eine Sitzposition dargestellt, in welcher sich das Sitzteil 4 nach vorne neigt. Im Vergleich zu der Sitzposition in Figur 4b hat das Verbindungselement 19 hier eine geringere Länge. Auch hier wird durch eine Drehung des Pleuels 33 ein entsprechender Ausgleich der Auslenkung entlang der Längsachse ermöglicht.

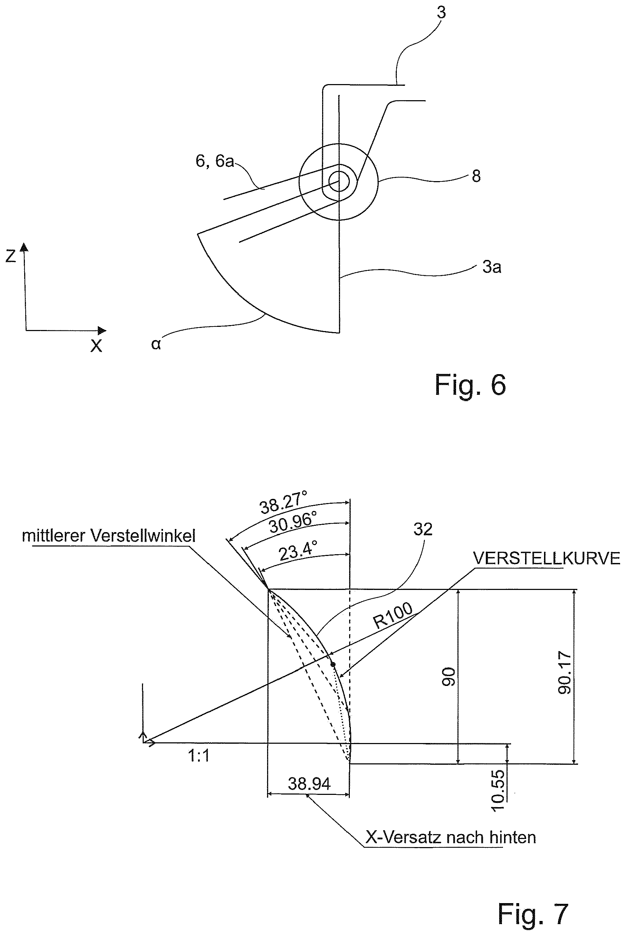

In der Figur 6 wird der Ausschnitt um die erste Drehachse 11 vergrößert gezeigt. Insbesondere ist hier der Winkel α gut ersichtlich. Der Winkel α erstreckt sich zwischen einer Mittelachse 6d des ersten Schenkels 6 und einer fiktiven Bezugslinie des Trägerelements 3a. Diese Bezugslinie ist im Wesentlichen senkrecht zu dem plattenartigen Element 30. Bei einer neigungsfreien Ausrichtung des Trägerelements 3, beziehungsweise des Sitzteils 4, in welcher das Sitzteils 4 im Wesentlichen parallel zu Ebene XY verläuft, ist die Bezugslinie des Trägerelements 3a im Wesentlichen parallel zu der Höhenachse Z. Der Winkel α liegt in einem Bereich zwischen 0° und 140°. Bevorzugt liegt der Winkel α in einem Bereich zwischen 0° und 120°. Weiter bevorzugt liegt der Winkel α in einem Bereich zwischen 0°und 90°. Vorteilhafterweise sind ist die Änderung der Sitzposition entlang der Höhenachse Z und entlang der Längsachse X proportional zu einer Änderung des Winkles a.

In den Figuren 1a, 1b und 7 ist eine Verstellkurve 32 des Fahrzeugsitzes 1 ersichtlich. Eine Änderung des Winkels a, welche eine Verlagerung des zumindest einen Trägerelements 3, beziehungsweise des Sitzteils 4 entlang der Höhenachse Z nach unten verursacht, verursacht zugleich eine Verlagerung des zumindest einen Trägerelements 3, beziehungsweise des Sitzteils 4 entlang der Längsachse X nach vorne. Eine Änderung des Winkels a, welche eine Verlagerung des zumindest einen Trägerelements 3, beziehungsweise des Sitzteils 4 entlang der Höhenachse Z nach oben verursacht, verursacht zugleich eine Verlagerung des zumindest einen Trägerelements 3, beziehungsweise des Sitzteils entlang der Längsachse X nach hinten. In Figur 7 sind beispielhafte Werte für den Verstellwinkel den Versatz nach hinten und den Versatz nach oben angegeben. Die Erfindung beschränkt sich natürlich nicht auf diese Werte.

In den Figuren 8 bis 14 ist die Winkeleinstelleinrichtung 8 gut erkennbar. Die Winkeleinstelleinrichtung 8 umfasst eine Feststelleinrichtung 25, welche auch als Rechner bezeichnet werden kann und welche einen eingestellten Winkel α feststellt. Weiterhin umfasst die Winkeleinstelleinrichtung 8 einen Antrieb 26, mittels welchem die Feststelleinrichtung 25 angetrieben wird, um den Winkel α zu verändern. Vorzugsweise umfasst die Winkeleinstelleinrichtung 8 eine Steuereinheit, welche den Antrieb 26 ansteuert. Dabei ist es von Vorteil, dass in der Steuereinheit bestimmte Sitzposition speicherbar sind. Der Nutzer kann dann zwischen den gespeicherten Positionen wechseln. Vorzugsweise ist eine Bedieneinrichtung vorgesehen, mittels welcher der Nutzer entsprechende Eingaben machen kann. Der Antrieb 26 ist mit einer Primärwelle 35 formschlüssig verbunden. Die Primärwelle 35, welche aus bauraumtechnischen Gründen vorgesehen ist, erstreckt sich von der rechten zur linken Seite und beinhaltet an beiden Enden ein, ebenfalls formschlüssig verbundenes, Stirnrad 36. Die Stirnräder 36 der Primärwelle 35 übertragen die Kraft weiter auf jeweils ein weiteres Stirnrad 37, diese sind ebenfalls formschlüssig mittels kurzen Sekundärachsen mit jeweils einer Feststelleinrichtung 25, beziehungsweise Rechner verbunden. Die beiden Feststelleinrichtungen 25 verbinden kraftschlüssig die ersten Schenkel 6 jeweils links und rechts mit dem Trägerelement 3. Bei Betätigung der Höhenverstellung wird demnach ein Drehmoment durch den Antrieb 26 erzeugt. Das Drehmoment und die Rotation wird von der Primarwelle 35 mittels der Stirnräder 36, 37 auf die Sekundärwellen, welche mit der Feststelleinrichtung 25 verbunden sind, übertragen. Das Drehmoment wird demnach links und rechts synchron übertragen. Hierdurch wird ein Verschwenken der ersten Schenkel relativ zu dem Trägerelement 3 verursacht.

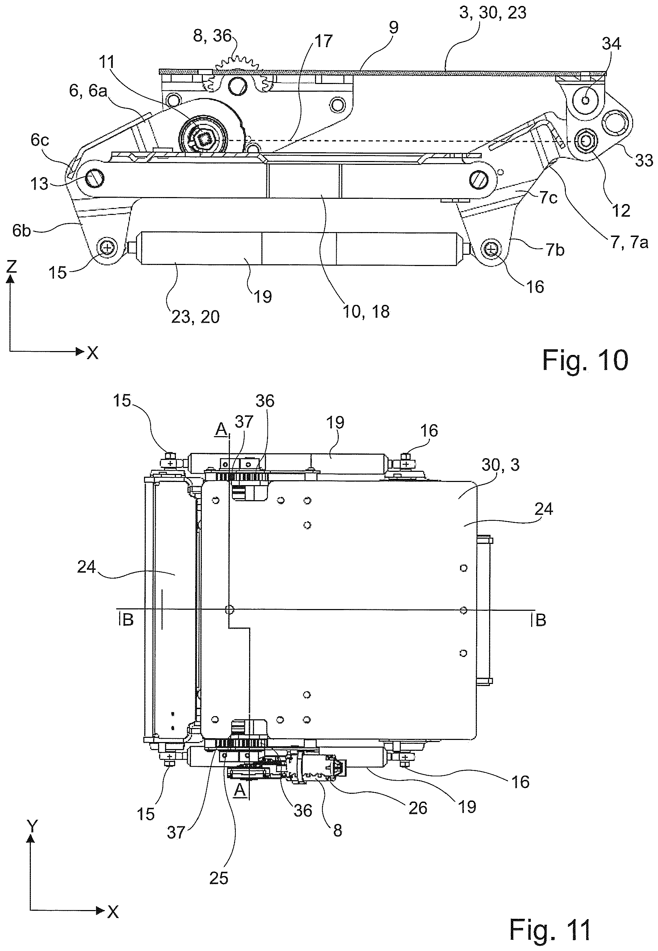

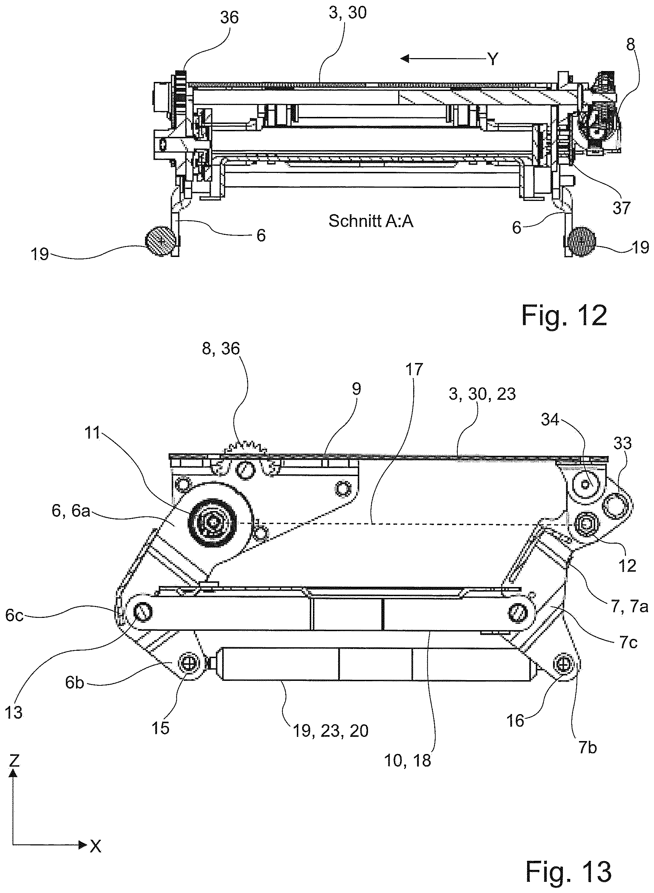

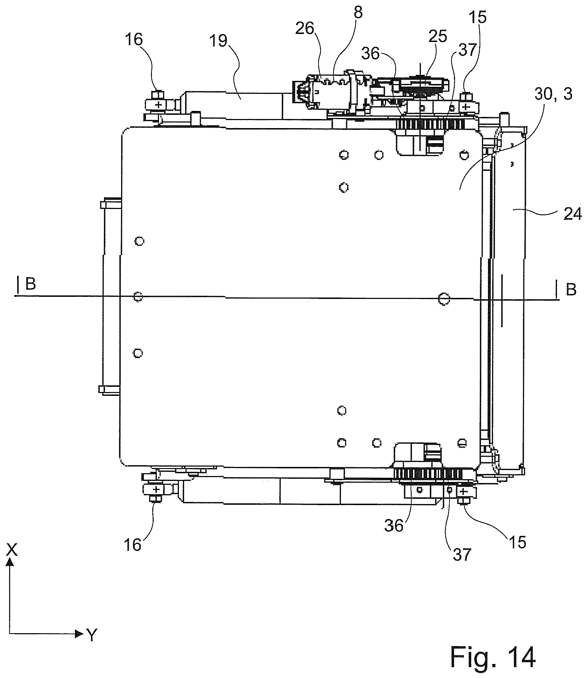

Die Figuren 11 und 14 stellen eine jeweilig Draufsicht auf die Vorrichtung 2 dar, wobei in Figur 12 ein Schnitt der Vorrichtung 2 dargestellt ist. Die Figur 10 und 13 zeigen eine Seitenansicht, in welcher die Verschwenkung der Schenkel 6, 7 zum Trägerelement 3 ersichtlich ist. Die Gleichhaltung bzw. Zwangsteuerung des ersten Schenkels 6 übernimmt hierbei das Verbindungselement 19, welche als starres oder in seiner Länge veränderbares Element ausgeführt sein kann.

Eine solche Vorrichtung 1 kann getrennt von der Vertikalfederung ausgestaltet sein. Eine Beeinflussung von Höhenverstellung und Federweg ist somit ausgeschlossen. Die Vorrichtung bietet eine ergonomische Verstellung des Sitzes und verursacht einen höhenabhängigen Abstand zu Lenkrad und Pedalerie.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Vorrichtung zur Einstellung einer Sitzposition
- 3: Trägerelement
- 3a: Bezugslinie des Trägerelements
- 4: Sitzteil
- 5: Sitzunterbau
- 6: erster Schenkel
- 6a: erster Abschnitt des ersten Schenkels
- 6b: zweiter Abschnitt des ersten Schenkels
- 6c: Knickbereich des ersten Schenkels
- 6d: Mittelachse des ersten Schenkels
- 7: zweiter Schenkel
- 7a: erster Abschnitt des zweiten Schenkels
- 7b: zweiter Abschnitt des zweiten Schenkels
- 7c: Knickbereich des zweiten Schenkels
- 8: Winkeleinstelleinrichtung
- 9: erste Längsverbindung
- 10: zweite Längsverbindung
- 11: erste Drehachse
- 12: zweite Drehachse
- 13: dritte Drehachse
- 14: vierte Drehachse
- 15: fünfte Drehachse
- 16: sechste Drehachse
- 17: erste Verbindungslinie
- 18: zweite Verbindungslinie
- 19: Verbindungselement
- 20: dritte Verbindungslinie
- 21: erstes Trapez
- 22: zweites Trapez
- 23: dritte Längsverbindung
- 24: Querverbindung
- 25: Feststelleinrichtung
- 26: Antrieb
- 27: Scherengestell
- 28: Feder und/oder Dämpfungseinrichtung
- 29: Karosserieboden
- 30: plattenartiges Element
- 31: Viereck
- 32: Verstellkurve
- 33: Beabstandungselement/Pleuel
- 34: siebte Drehachse
- 35: Primärwelle
- 36: Stirnrad
- 37: Stirnrad
- Z: Höhenachse
- X: Längsachse
- Y: Breitenachse
- α: Winkel
- β: Winkel

## Patentansprüche

1. Vorrichtung (2) zur Einstellung einer Sitzposition für einen Fahrzeugsitz (1), wobei die Vorrichtung (2) zumindest ein Trägerelement (3) für ein Sitzteil (4) umfasst und mit einem Sitzunterbau (5) verbindbar ist,
**dadurch gekennzeichnet, dass**
die Vorrichtung (2) zumindest einen ersten Schenkel (6) und zumindest einen zweiten Schenkel (7) umfasst, wobei die Schenkel (6, 7) drehbar an dem Sitzunterbau (5) und dem zumindest einem Trägerelement (3) anordenbar sind, wobei ein erster Winkel α zwischen dem ersten Schenkel (6) und dem Trägerelement (3) durch eine Winkeleinstelleinrichtung (8) einstellbar ist, wobei der zumindest eine erste Schenkel (6) und der zumindest eine zweite Schenkel (7) mechanisch gekoppelt sind, wobei eine Änderung des Winkels α eine Verlagerung des zumindest einen Trägerelements (3) entlang einer Höhenachse Z und entlang einer Längsachse X verursacht, wobei die Winkeleinstelleinrichtung (8) eine Feststelleinrichtung (25) umfasst, welche einen eingestellten Winkel α feststellt, wobei die Winkeleinstelleinrichtung (8) einen Antrieb (26) umfasst, mittels welchem die Feststelleinrichtung (25) angetrieben wird, um den Winkel α zu verändern, wobei der Antrieb (26) mit einer sich in Breitenrichtung (Y) erstreckenden Primärwelle (35) formschlüssig verbunden ist, wobei die Primärwelle (35) an beiden Enden ein Stirnrad (36) umfasst, wobei die Stirnräder (36) jeweils eine Kraft auf ein weiteres Stirnrad (37) übertragen, welche formschlüssig mittels Sekundärachsen mit jeweils einer Feststelleinrichtung (25) verbunden sind.

2. Vorrichtung (2) nach Anspruch 1,
**dadurch gekennzeichnet, dass**
eine Änderung des Winkels a, welche eine Verlagerung des zumindest einen Trägerelements (3) entlang der Höhenachse Z nach unten verursacht, zugleich eine Verlagerung des zumindest einen Trägerelements (3) entlang der Längsachse X nach vorne verursacht, wobei eine Änderung des Winkels a, welche eine Verlagerung des zumindest einen Trägerelements (3) entlang der Höhenachse Z nach oben verursacht, zugleich eine Verlagerung des zumindest einen Trägerelements (3) entlang der Längsachse X nach hinten verursacht.

3. Vorrichtung (2) nach Anspruch 1 oder 2,
**dadurch gekennzeichnet, dass**
der zumindest eine erste Schenkel (6) entlang der Längsachse X hinter dem zumindest einen zweiten Schenkel (7) angeordnet ist, wobei der zumindest eine erste Schenkel (6) entlang der Längsachse X mit dem zumindest einen zweiten Schenkel (7) mittels einer ersten Längsverbindung (9) verbunden ist, welche durch das zumindest eine Trägerelement (3) oder durch das Sitzteil (4) realisiert ist, wobei der zumindest eine erste Schenkel (6) und der zumindest eine zweite Schenkel (7) entlang der Längsachse X mittels einer zweiten Längsverbindung 10 verbunden sind, welche durch den Sitzunterbau (5) realisiert ist.

4. Vorrichtung (2) nach einem der vorhergehenden Ansprüche,
**dadurch gekennzeichnet, dass**
der zumindest eine erste Schenkel (6) und der zumindest eine zweite Schenkel (7) jeweils einen ersten Abschnitt (6a, 7a) und einen zweiten Abschnitt (6b, 7b) aufweisen, wobei der erste Abschnitt (6a, 7a) und der zweite Abschnitt (6b, 7b) einen Winkel β einschließen, wodurch der zumindest eine erste Schenkel (6) und der zumindest eine zweite Schenkel (7) im Wesentlichen L-förmig ausgestaltet sind, , wobei zwischen dem ersten Abschnitt (6a, 7a) und dem zweiten Abschnitt (6b, 6b) ein Knickbereich (6c, 7c) vorgesehen ist.

5. Vorrichtung (2) nach einem der vorhergehenden Ansprüche,
**dadurch gekennzeichnet, dass**
der zumindest eine erste Schenkel (6) und der zumindest eine zweite Schenkel (7) um jeweils eine Drehachse (11, 12) relativ zu dem Trägerelement (3) und um jeweils eine weitere Drehachse (13, 14) relativ zu dem Sitzunterbau (5) drehbar gelagert sind, wobei in einem oberen Endbereich des ersten Abschnitts (6a) die Drehachse (11, 12) bezüglich der Drehung relativ zu dem Trägerelement (3) angeordnet ist, wobei die Drehachse (13, 14) bezüglich der Drehung relativ zu dem Sitzunterbau (5) in dem Knickbereich (6c, 7c) angeordnet ist.

6. Vorrichtung (2) nach einem der vorhergehenden Ansprüche,
**dadurch gekennzeichnet, dass**
der erste Abschnitt (6a) des zumindest einen ersten Schenkels (6) und der erste Abschnitt (7a) des zumindest einen zweiten Schenkels (7) eine gleiche Länge aufweisen, wobei die Drehachsen (11, 12) bezüglich der Drehung relativ zu dem Trägerelement (3) des zumindest einen ersten Schenkels (6) und des zumindest einen zweiten Schenkels (7) auf einer ersten fiktiven oder realen Verbindungslinie (17) liegen, wobei die Drehachsen (13, 14) bezüglich der Drehung relativ zu dem Sitzunterbau (5) des zumindest einen ersten Schenkels (6) und des zumindest einen zweiten Schenkels (7) auf einer zweiten fiktiven oder realen Verbindungslinie (18) liegen, wobei die erste Verbindungslinie (17), die zweite Verbindungslinie (18) und die ersten Abschnitte (6a, 7a) des zumindest einen ersten Schenkels (6) und des zumindest einen zweiten Schenkels (7) ein Trapez (21) bilden.

7. Vorrichtung (2) nach Anspruch 4,
**dadurch gekennzeichnet, dass**
zwischen dem zweiten Abschnitt (6b) des ersten Schenkels (6) und dem zweiten Abschnitt (7b) des zweiten Schenkels (7) ein Verbindungselement (19) vorgesehen ist, wobei der jeweilige zweite Abschnitt (6b, 7b) um eine Drehachse (15, 16) relativ zu dem Verbindungselement (19) drehbar ist, wobei die Drehachse (15, 16) bezüglich einer Drehung des zumindest einen ersten Schenkels (6) oder des zumindest einen zweiten Schenkels (7) relativ zu dem Verbindungselement (19) in einem unteren Endbereich des jeweiligen zweiten Abschnitts (6b, 7b) angeordnet ist.

8. Vorrichtung (2) nach Anspruch 7,
**dadurch gekennzeichnet, dass**
der zweite Abschnitt (6b) des zumindest einen ersten Schenkels (6) und der zweite Abschnitt (7b) des zumindest einen zweiten Schenkels (7) eine gleiche Länge aufweisen, wobei die Drehachsen (15, 16) bezüglich der Drehung des zumindest einen ersten Schenkels (6) und des zumindest einen zweiten Schenkels (7) relativ zu dem Verbindungselement (19) auf einer dritten fiktiven oder realen Verbindungslinie (20) liegen, wobei die zweite Verbindungslinie (18), die dritte Verbindungslinie (20) und die zweiten Abschnitte (6b, 7b) des zumindest einen ersten Schenkels (6) und des zumindest einen zweiten Schenkels (7) ein zweites Trapez (22) bilden.

9. Vorrichtung (2) nach einem der Ansprüche 4 bis 8,
**dadurch gekennzeichnet, dass**
die mechanische Kopplung zwischen dem zumindest einen ersten Schenkel (6) und dem zumindest einen zweiten Schenkel (7) eine starre dritte Längsverbindung (23) zwischen dem zweiten Abschnitt (6b) des zumindest einen ersten Schenkel (6) und dem zweiten Abschnitt (7b) des zumindest einen zweiten Schenkels (7) umfasst.

10. Vorrichtung (2) nach einem der vorhergehenden Ansprüche,
**dadurch gekennzeichnet, dass**
zwei erste Schenkel (6) und zwei zweite Schenkel (7) vorgesehen sind, wobei die beiden ersten Schenkel (6) entlang der Breitenachse Y voneinander beabstandet sind und um die gleichen Drehachsen (11, 13, 15) drehbar sind, wobei die beiden zweiten Schenkel (7) entlang der Breitenachse Y voneinander beabstandet und um die gleichen Drehachsen (12, 14, 16) drehbar sind, wobei die entlang der Breitenachse Y sich gegenüberliegenden Schenkel (6, 7) mittels zumindest einer Querverbindung (24) verbunden sind.

11. Vorrichtung (2) nach einem der vorhergehenden Ansprüche,
**dadurch gekennzeichnet, dass**
die Vorrichtung (2) ein modulares Bauelement ist.

12. Fahrzeugsitz (1) mit einer Vorrichtung (2) nach einem vorhergehenden Ansprüche.

13. Fahrzeugsitz (1) nach Anspruch 12,
**dadurch gekennzeichnet, dass**
der Fahrzeugsitz (1) ein Scherengestell (27) umfasst, mittels welchem der Fahrzeugsitz (1) an einem Karosserieboden (29) befestigt ist, wobei der Fahrzeugsitz (1) eine Feder und/oder Dämpfungseinrichtung (28) zur Federung/ Dämpfung von vertikalen und/oder horizontalen Schwingungen umfasst.

## Claims

1. Device (2) for adjusting a seat position of a vehicle seat (1), wherein the device (2) comprises at least one support element (3) for a seat part (4) and is connectable to a seat substructure (5),
**characterised in that**
the device (2) comprises at least one first leg (6) and at least one second leg (7), the legs (6, 7) being rotatably arrangeable on the seat substructure (5) and the at least one support element (3), wherein a first angle α between the first leg (6) and the support element (3) can be adjusted by an angle adjustment device (8), wherein the at least one first leg (6) and the at least one second leg (7) are mechanically coupled, wherein a change in the angle α causes the at least one support element (3) to be displaced along a height axis Z and along a longitudinal axis X, wherein the angle adjustment device (8) comprises a locking device (25), which locks an adjusted angle α, wherein the angle adjustment device (8) comprises a drive (26), by means of which the locking device (25) is driven in order to change the angle α, wherein the drive (26) is connected to a primary shaft (35) extending in a width direction (Y) in a form-fitting manner, wherein the primary shaft (35) comprises a spur gear (36) on both sides, wherein the spur gears (36) each transmit the force to a further spur gear (37), which are connected to a respective locking device (25) in a form-fitting manner by means of secondary axles.

2. Device (2) according to claim 1,
**characterised in that**
a change of the angle α, which causes a downward displacement of the at least one support element (3) along the height axis Z, at the same time causes a forward displacement of the at least one support element (3) along the longitudinal axis X, wherein a change in the angle α, which causes an upward displacement of the at least one support element (3) along the height axis Z, at the same time causes a backward displacement of the at least one support element (3) along the longitudinal axis X.

3. Device (2) according to claim 1 or 2,
**characterised in that**
the at least one first leg (6) is arranged along the longitudinal axis X behind the at least one second leg (7), wherein the at least one first leg (6) along the longitudinal axis X is connected to the at least one second leg (7) by means of a first longitudinal connection (9), which is realised by the at least one support element (3) or by the seat part (4), wherein the at least one first leg (6) and the at least one second leg (7) are connected along the longitudinal axis X by means of a second longitudinal connection (10), which is realised by the seat substructure (5).

4. Device (2) according to any of the preceding claims,
**characterised in that**
the at least one first leg (6) and the at least one second leg (7) each comprise a first section (6a, 7a) and a second section (6b, 7b), wherein the first section (6a, 7a) and the second section (6b, 7b) enclose an angle β, by means of which the at least one first leg (6) and the at least one second leg (7) are substantially L-shaped, wherein a bend region (6c, 7c) is provided between the first section (6a, 7a) and the second section (6b, 6b).

5. Device (2) according to any of the preceding claims,
**characterised in that**
the at least one first leg (6) and the at least one second leg (7) are each rotatably mounted about an axis of rotation (11, 12) relative to the support element (3) and about a further axis of rotation (13, 14) relative to the seat substructure (5), wherein, in an upper end region of the first section (6a), the axis of rotation (11, 12) is arranged with respect to the rotation relative to the support element (3), the axis of rotation (13, 14) with respect to the rotation relative to the seat substructure (5) being arranged in the bend region (6c, 7c).

6. Device (2) according to any of the preceding claims,
**characterised in that**
the first section (6a) of the at least one first leg (6) and the first section (7a) of the at least one second leg (7) have the same length, wherein the axes of rotation (11, 12) with respect to the rotation relative to the support element (3) of the at least one first leg (6) and the at least one second leg (7) lie on a first imaginary or real connecting line (17), wherein the axes of rotation (13, 14) with respect to the rotation relative to the seat substructure (5) of the at least one first leg (6) and the at least one second leg (7) lie on a second imaginary or real connecting line (18), wherein the first connecting line (17), the second connecting line (18) and the first sections (6a, 7a) of the at least one first leg (6) and the at least one second leg (7) form a trapezoid (21).

7. Device (2) according to claim 4,
**characterised in that**
a connecting element (19) is provided between the second section (6b) of the first leg (6) and the second section (7b) of the second leg (7), wherein the respective second section (6b, 7b) is rotatable about an axis of rotation (15, 16) relative to the connecting element (19), wherein the axis of rotation (15, 16) with respect to a rotation of the at least one first leg (6) or the at least one second leg (7) relative to the connecting element (19) is arranged in a lower end region of the respective second section (6b, 7b).

8. Device (2) according to claim 7,
**characterised in that**
the second section (6b) of the at least one first leg (6) and the second section (7b) of the at least one second leg (7) have the same length, wherein the axes of rotation (15, 16) with respect to the rotation of the at least one first leg (6) and the at least one second leg (7) relative to the connecting element (19) lie on a third imaginary or real connecting line (20), wherein the second connecting line (18), the third connecting line (20) and the second sections (6b, 7b) of the at least one first leg (6) and the at least one second leg (7) form a second trapezoid (22).

9. Device (2) according to any of claims 4 to 8,
**characterised in that**
the mechanical coupling between the at least one first leg (6) and the at least one second leg (7) comprises a rigid third longitudinal connection (23) between the second section (6b) of the at least one first leg (6) and the second section (7b) of the at least one second leg (7).

10. Device (2) according to any of the preceding claims,
**characterised in that**
two first legs (6) and two second legs (7) are provided, wherein the two first legs (6) are spaced from one another along a width axis Y and are rotatable about the same axes of rotation (11, 13, 15), wherein the two second legs (7) are spaced from one another along the width axis Y and are rotatable about the same axes of rotation (12, 14, 16), wherein the legs (6, 7) opposite one another along the width axis Y are connected by means of at least one transverse connection (24).

11. Device (2) according to any of the preceding claims,
**characterised in that**
the device (2) is a modular component.

12. Vehicle seat (1) with a device (2) according to any of the preceding claims.

13. Vehicle seat (1) according to claim 12
**characterised in that**
the vehicle seat (1) comprises a scissor frame (27) by means of which the vehicle seat (1) is attached to a body floor (29), wherein the vehicle seat (1) comprises a spring and/or damping device (28) for the suspension/ damping of vertical and/or horizontal vibrations.

## Revendications

1. Dispositif (2) de réglage d'une position d'assise pour un siège de véhicule (1), le dispositif (2) comportant au moins un élément de support (3) pour une partie siège (4) et pouvant être relié à une infrastructure de siège (5),
**caractérisé par le fait que**
le dispositif (2) comporte au moins une première branche (6) et au moins une seconde branche (7), les branches (6, 7) pouvant être disposées de manière rotative sur l'infrastructure de siège (5) et ledit au moins un élément de support (3), un premier angle α entre la première branche (6) et l'élément de support (3) étant réglable par un dispositif de réglage d'angle (8), ladite au moins une première branche (6) et ladite au moins une seconde branche (7) étant couplées mécaniquement, une modification de l'angle α provoquant un déplacement dudit au moins un élément de support (3) le long d'un axe dans la direction de la hauteur Z et le long d'un axe dans la direction de la longueur X, le dispositif de réglage angulaire (8) comportant un dispositif de blocage (25), lequel bloque un angle réglé a, le dispositif de réglage d'angle (8) comportant un entraînement (26), au moyen duquel le dispositif de blocage (25) est entraîné pour modifier l'angle a, l'entraînement (26) étant relié par coopération de formes avec un arbre primaire (35) s'étendant dans la direction de la largeur Y, l'arbre primaire (35) comportant un engrenage droit (36) aux deux extrémités, les engrenages droits (36) transmettant chacun une force sur un autre engrenage droit (37), lesquels sont reliés par coopération de formes au moyen d'axes secondaires avec respectivement un dispositif de blocage (25).

2. Dispositif (2) selon la revendication 1, **caractérisé par le fait qu'** une modification de l'angle a, laquelle provoque un déplacement dudit au moins un élément de support (3) vers le bas le long de l'axe dans la direction de la hauteur Z, provoque en même temps un déplacement dudit au moins un élément de support (3) vers l'avant le long de l'axe dans la direction de la longueur X, une modification de l'angle a, laquelle provoque un déplacement dudit au moins un élément de support (3) vers le haut le long de l'axe dans la direction de la hauteur Z, provoquant en même temps un déplacement dudit au moins un élément de support (3) vers l'arrière le long de l'axe dans la direction de la longueur X.

3. Dispositif (2) selon l'une des revendications 1 ou 2,
**caractérisé par le fait que**
ladite au moins une première branche (6) est disposée le long de l'axe dans la direction de la longueur X derrière ladite au moins une seconde branche (7), ladite au moins une première branche (6) le long de l'axe dans la direction de la longueur X étant reliée à ladite au moins une seconde branche (7) au moyen d'une première liaison longitudinale (9), laquelle est réalisée par ledit au moins un élément de support (3) ou par la partie siège (4), ladite au moins une première branche (6) et ladite au moins une seconde branche (7) étant reliées le long de l'axe dans la direction de la longueur X au moyen d'une deuxième liaison longitudinale (10), laquelle est réalisée par l'infrastructure de siège (5).

4. Dispositif (2) selon l'une des revendications précédentes,
**caractérisé par le fait que**
ladite au moins une première branche (6) et ladite au moins une seconde branche (7) présentent chacune une première section (6a, 7a) et une seconde section (6b, 7b), la première section (6a, 7a) et la seconde section (6b, 7b) formant un angle β, ce par quoi ladite au moins une première branche (6) et ladite au moins une seconde branche (7) sont configurées sensiblement en forme de L, une zone coudée (6c, 7c) étant prévue entre la première section (6a, 7a) et la seconde section (6b, 6b).

5. Dispositif (2) selon l'une des revendications précédentes,
**caractérisé par le fait que**
ladite au moins une première branche (6) et ladite au moins une seconde branche (7) sont montées de manière à pouvoir tourner autour d'un axe de rotation respectif (11, 12) par rapport à l'élément de support (3) et autour d'un autre axe de rotation respectif (13, 14) par rapport à l'infrastructure de siège (5), l'axe de rotation (11, 12) étant disposé dans une zone d'extrémité supérieure de la première section (6a) en ce qui concerne la rotation par rapport à l'élément de support (3), l'axe de rotation (13, 14) étant disposé dans la zone coudée (6c, 7c) en ce qui concerne la rotation par rapport à l'infrastructure de siège (5).

6. Dispositif (2) selon l'une des revendications précédentes,
**caractérisé par le fait que**
la première section (6a) de ladite au moins une première branche (6) et la première section (7a) de ladite au moins une seconde branche (7) présentent une longueur égale, les axes de rotation (11, 12) se trouvant sur une première ligne de liaison fictive ou réelle (17) en ce qui concerne la rotation par rapport à l'élément de support (3) de ladite au moins une première branche (6) et de ladite au moins une seconde branche (7), les axes de rotation (13, 14) se trouvant sur une deuxième ligne de liaison fictive ou réelle (18) en ce qui concerne la rotation par rapport à l'infrastructure de siège (5) de ladite au moins une première branche (6) et de ladite au moins une seconde branche (7), la première ligne de liaison (17), la deuxième ligne de liaison (18) et les premières sections (6a, 7a) de ladite au moins une première branche (6) et de ladite au moins une seconde branche (7) formant un trapèze (21).

7. Dispositif (2) selon la revendication 4, **caractérisé par le fait qu'** un élément de liaison (19) est prévu entre la seconde section (6b) de la première branche (6) et la seconde section (7b) de la seconde branche (7), la seconde section respective (6b, 7b) pouvant tourner autour d'un axe de rotation (15, 16) par rapport à l'élément de liaison (19), l'axe de rotation (15, 16) étant disposé dans une zone d'extrémité inférieure de la seconde section respective (6b, 7b) en ce qui concerne une rotation de ladite au moins une première branche (6) ou de ladite au moins une seconde branche (7) par rapport à l'élément de liaison (19).

8. Dispositif (2) selon la revendication 7, **caractérisé par le fait que** la seconde section (6b) de ladite au moins une première branche (6) et la seconde section (7b) de ladite au moins une seconde branche (7) présentent une longueur égale, les axes de rotation (15, 16) se trouvant sur une troisième ligne de liaison fictive ou réelle (20) en ce qui concerne la rotation de ladite au moins une première branche (6) et de ladite au moins une seconde branche (7) par rapport à l'élément de liaison (19), la deuxième ligne de liaison (18), la troisième ligne de liaison (20) et les secondes sections (6b, 7b) de ladite au moins une première branche (6) et de ladite au moins une seconde branche (7) formant un second trapèze (22).

9. Dispositif (2) selon l'une des revendications 4 à 8,
**caractérisé par le fait que**
le couplage mécanique entre ladite au moins une première branche (6) et ladite au moins une seconde branche (7) comporte une troisième liaison longitudinale rigide (23) entre la seconde section (6b) de ladite au moins une première branche (6) et la seconde section (7b) de ladite au moins une seconde branche (7).

10. Dispositif (2) selon l'une des revendications précédentes,
**caractérisé par le fait que**
deux premières branches (6) et deux secondes branches (7) sont prévues, les deux premières branches (6) étant espacées l'une de l'autre le long de l'axe dans la direction de la largeur Y et pouvant tourner autour des mêmes axes de rotation (11, 13, 15), les deux secondes branches (7) étant espacées l'une de l'autre le long de l'axe dans la direction de la largeur Y et pouvant tourner autour des mêmes axes de rotation (12, 14, 16), les branches (6, 7) opposées l'une à l'autre le long de l'axe dans la direction de la largeur Y étant reliées au moyen d'au moins une liaison transversale (24).

11. Dispositif (2) selon l'une des revendications précédentes,
**caractérisé par le fait que**
le dispositif (2) est un élément modulaire.

12. Siège de véhicule (1) ayant un dispositif (2) selon l'une des revendications précédentes.

13. Siège de véhicule (1) selon la revendication 12,
**caractérisé par le fait que**
le siège de véhicule (1) comporte un châssis en ciseaux (27) au moyen duquel le siège de véhicule (1) est fixé à un plancher de carrosserie (29), le siège de véhicule (1) comportant un ressort et/ou un dispositif d'amortissement (28) pour la suspension/l'amortissement de vibrations verticales et/ou horizontales.
